# EUROPEAN PATENT APPLICATION

(11) **EP 1 207 479 A1**
(43) Date of publication of application: **22.05.2002**
(21) Application number: 01204350.1
(22) Date of filing: 14.11.2001
(51) Int. Cl.: G06F 17/60

(54) **Method and system for financing an order via the internet**

(30) Priority: 16.11.2000 NL 1016625
(71) Applicant: Intellect Investments B.V., 4906 CN Oosterhout (NL)
(72) Inventor: Haarman, Paulinus Cornelis Antonius Johannes, 4909 AE Oosteind (NL); Haarman, Franciscus Cornelis Antonius Johannes, 4909 AE Oosteind (NL)
(74) Representative: Dorna, Peter

(57) **Abstract**

The invention relates to a method for financing an order that was placed via a data network, such as the Internet, comprising the steps of:
- A: taking a buyer's order via the data network, by or on behalf of a seller, by registering order data of a product or service, identification data of the buyer and a financing request from the buyer,
- B: obtaining assessment data in respect of the financing request,
- C: checking the buyer's creditworthiness on the basis of the available data by a lender in connection with the approval or rejection of the financing request,
- D: visiting the buyer, by or on behalf of the lender, upon approval of the financing request,
- E: having the buyer sign a financing agreement, preferably during the aforesaid visit,
- F: verifying at least part of the identification data and assessment data against relevant documents provided by the buyer, and
- G: delivering the order to the buyer by the seller after the financing agreement has been signed and the verification carried out in step F has produced a positive result.

## Description

The invention relates to a method for financing an order for the purchase of a product or service via a data network, such as the Internet. Within the framework of the present invention, the above phrase "financing an order" is to be understood to include not only the borrowing of the entire amount involved in the order, or part thereof, from a financing company, but also the renting or leasing or payment in instalments of products or services as well as other related financial schemes and transactions.

Trading over the Internet has expanded enormously the last few years. This form of trading is different from traditional trading in that the buyer and the seller do not meet face to face. This makes special demands on the purchasing process, especially if financing is involved.

Generally, a credit card is used in when trading over the Internet. This system has appeared to be liable to fraud; in the first instance, it is the credit card company that has to bear the financial risk, which credit card company in turn will recover the cost involved in fraud from its credit card holders. In addition to that, not every person has a credit card, or the amount that a person has disposition of with his credit card is limited, as a result of which not all orders can be paid for with a credit card.

In addition to that, use is also made of the possibility of paying either directly upon delivery of the purchases or after receipt of an invoice. Also these systems, however, which in principle do not involve any financing, are liable to fraud in the sense that people who regret their decision tell the deliverer not to have made the purchase in question or fail to pay the invoices in respect of their purchases. Roughly, it can be stated that the drawbacks of the existing systems of payment increase as the price of the purchase increases, especially if financing is involved.

The object of the invention is to provide a method as referred to in the introduction which provides a solution for the technical problems involved in making payments via data networks by means of the current payment techniques, such as the aforesaid credit card, and which is thus significantly less liable to fraud than the existing systems and which in addition is customer-friendly. It is important in this connection that the identity of the buyer, that is, the person or the instance that places the order, be established with a high degree of probability and that the correct assessment data for financing be obtained, in order to arrive at a financing agreement which is signed by both parties, that is, the lender and the buyer. The latter is legally required in many countries, depending on the height of the amount to be financed. In order to accomplish the objective as defined above, the method according to the invention comprises the steps of:
A taking a buyer's order via the data network, by or on behalf of a seller, by registering order data of a product or service, identification data of the buyer and a financing request from the buyer,
B obtaining assessment data in respect of the financing request,
C checking the buyer's creditworthiness on the basis of the available data by a lender in connection with the approval or rejection of the financing request,
D visiting the buyer, by or on behalf of the lender, upon approval of the financing request,
E having the buyer sign a financing agreement, preferably during the aforesaid visit,
F verifying at least part of the identification data and assessment data against relevant documents provided by the buyer, and
G delivering the order to the buyer by the seller after the financing agreement has been signed and the verification carried out in step F has produced a positive result.

Such a method recognizes that communication via Internet does not suffice for obtaining sound financing, but that personal contact with the buyer is necessary. The method according to the invention has a large number of advantages, in particular relating to increased security against fraud and increased customer-friendliness owing to the inventive utilization of existing technical facilities, in particular for personal communication between the buyer and the lender or its agent.

If the lender approves the financing application, the buyer will receive a financing agreement for signature. The buyer is visited personally for this purpose, on which occasion verification of the address can take place. During the visit, the visitor can furthermore make copies of relevant evidence of the identification data, such as original identity papers, a bank card, a bank statement and/or a pay slip. The copies that are made can be usual photocopies, but also digital images obtained by scanning, for example, with the visitor bringing along the equipment that is needed for making copies. Since these copies are made by the visitor himself in his capacity as representative of the lender, the risk of fraud in this regard is further reduced, the more so as the visitor may be specially trained to notice such fraud. This in contrast to, for example, those persons who merely deliver a purchase at an address. The personal visit will make the buyer feel that he is being given personal attention, so that he will be less inclined to cancel orders. After the visit, the visitor can take along the signed financing agreement, which speeds up matters in keeping with the speed that is typical of the Internet. Furthermore, the data as stated on the copies that have been made can be compared with the data provided by the buyer in all peace and quiet, preferably in an office environment, and if the data are found to be correct, the seller can be informed that the matter of financing is fixed and that the seller can deliver the order to the buyer.

Since a face-to-face meeting takes place with the buyer himself, orders placed by non-existent persons or by persons passing themselves off as another person can be detected at an early stage, at any rate before delivery of the order. In addition, the personal contact provides a possibility of providing the client with additional information on the product or service that he has ordered and on the financing thereof, and additional orders may be booked. The buyer will experience the personal attention as positive, which reduces the risk of complaints. In addition, in view of the passive attitude that is typical of Internet buyers, a home visit is a suitable supplementation.

As an aside, reference is made to three patent specifications. US patent no. 5,826,240 relates to a sales system for supporting a face-to-face sales person. The present invention, on the other hand, relates to the completion of a sales process, an important difference being the fact that the sale takes place via a data network, such as the Internet, which by definition means that there is not a face-to-face sales situation. US patent no. 5,704,044 relates to a system for processing health insurance claims. In that situation, there is an existing network of clients who are known to the health insurer. Consequently, the identification of the clients is not a recurring event, whereas this forms an important aspect of the present the invention. No mention is made in said US patent of a visit in accordance with step D of the present invention, nor of the related steps. Finally, US patent no. 4,858,121 makes no mention of any form of personal identification of a purchasing party, either. Said patent merely discloses a digital payment system, which uses information that is stored in patient files.

Preferably, the buyer is contacted by or on behalf of the lender for the purpose of obtaining the assessment data in accordance with step B, which is preferably done by telephone, so that a first interpersonal contact takes place. During this contact, a first verification of the identification data can be made already, the assessment data can be registered and the identification data can be completed, if necessary.

In addition to that, the need for a sincere customer to commit a large number of identification data as well as assessment data, for example data relating to his financial position, to an impersonal form on a screen is eliminated in this manner. Apart from the fact that people do not like to provide such personal information over the Internet, there is also a threshold that makes people hesitant about completing extensive forms via the Internet before they can place an order.

Although the terms buyer and seller are specifically used in the above, it is emphasized that also leasing schemes are covered by the inventive concept. For a leasing company (equivalent to the seller) it is important to check whether a client (equivalent to the buyer) will be able to pay the amounts involved in the lease, which can be assessed by a lender through an agent.

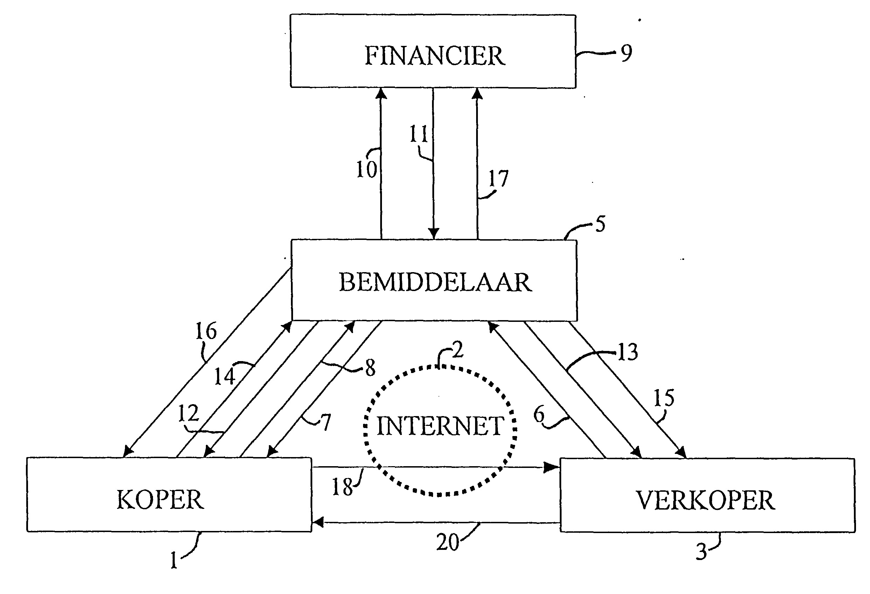

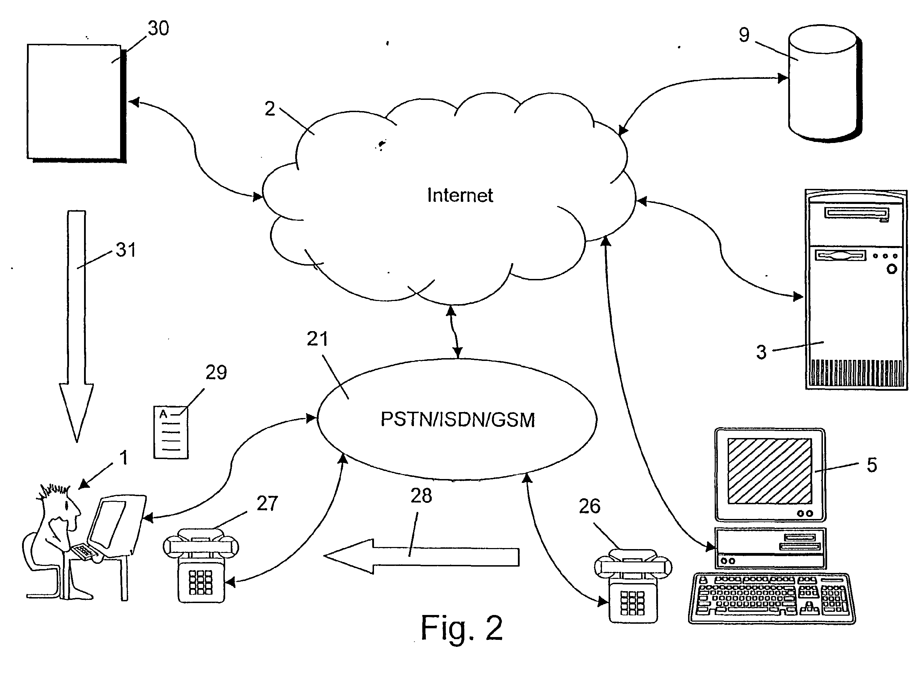

The invention will be explained in more detail hereinafter by means of a non-limitative example of an order over the Internet, with reference being made to the schematic figures 1 and 2.

Fig. 1 schematically shows in particular the actions that take place between the various actors in a preferred embodiment of the method according to the invention.

Fig. 2 schematically shows the lines of communication between the various actors.

Buyer 1, having looked around on the Internet 2, has chosen a product, for example a car which is being offered for sale on the Internet 2 by a seller 3. To order the car, the buyer 1 digitally completes a form such as presented on the seller's Internet site. The data that the buyer 1 enters in the form are data relating to the car, for example the model, the colour, the engine type, etc. on the one hand, and a limited number of personal data on the other hand. Furthermore, the buyer can indicate on the form whether he wishes to finance the purchase of the car. All these data are received by the seller 3 (arrow 18) who, in case financing is requested by the buyer 1, forwards the personal data to an agent 5 by suitable means of communication, for example by telefax or by e-mail, as is indicated by arrow 6. Modern technology also makes it possible, of course, for said personal data to be automatically forwarded to a financing agent in those cases where the buyer wishes to finance his purchase.

Subsequently, the agent 5 contacts the buyer 1 (arrow 7), preferably by telephone, in the first place in order to carry out a first verification as regards the buyer's identity and in the second place in order to register additional personal information (arrow 8) that may be relevant in connection with the desired financing. Said information may be information about the buyer's income and any outstanding debts, for example. Agent 5 passes this information on to the lender 9 (arrow 10).

The lender 9 examines the application on the basis of the information that has been supplied to him, using a credit registration system, for example. The results of this examination are subsequently submitted to the agent 5 (arrow 11). Agent 5 will inform both the buyer (arrow 12) and the seller (arrow 13) of the result of the examination, preferably by telephone. If the application has been rejected, it will be ascertained in consultation with the buyer whether a different manner of payment is possible. If the application has been approved, the agent will visit the buyer, on which occasion he can verify anew whether the assumed identity of the buyer is correct. During the visit, the agent can make copies of relevant original documents, such as identity papers, a bank card, a bank statement and/or a pay slip, for example by means of a portable scanner. Furthermore, the agent can provide some additional information about the financing arrangements.

During the meeting, a financing agreement is drawn up, if necessary, and signed by the customer in the presence of the agent, after which the agent will return to his office with the signed financing agreement and the copies of the documents (arrow 14), where he will make a final check to make sure that the copied information tallies with the information such as known so far.

If this is indeed the case, the agent will inform the seller (arrow 15), the buyer (arrow 16) and the lender (arrow 17) of his positive findings, which indicates to the seller that he can deliver the ordered product or service (arrow 20).

Fig. 2 is an alternative visualisation of the above-described preferred embodiment of the present invention. Buyer 1 is connected to the Internet 2 via a network of landlines or a mobile telephone network 21. On the Internet 2, a seller 3 offers products and/or services through its server. As soon as buyer 1 has placed an order with seller 3 via the Internet 2, indicating to require financing, a financing agent 5 is called in and personal details of the buyer 1 and his financing requirement are communicated to the agent, which may or may not take place via the Internet. Said information may reach the financing agent automatically, for example by means of an automatically generated e-mail; within the framework of the invention, however, there is for example a possibility that the seller 3 will contact the financing agent 5 by telephone or by fax for this purpose. Subsequently, the financing agent 5 contacts the buyer 1 by telephone (26, 27) for the purpose of registering assessment data in respect of the financing request associated with the financing requirement. The financing agent 5 assesses the buyer's financing request on the basis of information received from lender 9. If the financing request is in principle approved by the financing agent 5, the financing agent 5 will pay a personal visit to the buyer 1 (arrow 28). During this visit, identification of the buyer 1 takes place and a financing agreement 29 is signed by the buyer 1. During the financing agent's visit to the buyer 1, copies are furthermore made of identification papers, such as a passport or a driving licence, the information on which is verified after the financing agent's visit to the buyer 1. Within the framework of this invention, there is a possibility that the financing agreement 29 is not sent to the buyer 1 until the information on the copied identification papers has been verified. As soon as the financing agreement 29 has been signed by the buyer 1, and all the above verification steps as regards the buyer's identity have been successfully concluded, the financing agent will on the one hand forward the financing agreement 29 to the lender 9, whilst on the other hand the financing agent 5 will inform the seller 3 that there is no impediment from a financing viewpoint to the actual delivery of the ordered product or service. To this end, the seller 3 contacts a depot 30, whether or not via the Internet 2, after which delivery of the ordered product or service to the buyer 1 as indicated by arrow 31 can take place.

The terms seller, buyer, financing agent and lender are to be considered as purely functional terms not referring to any particular person or company. Thus, one person can act both as the financing agent and as the lender, but also different persons within one company can act as such. According to another possibility, different persons perform one function, such as the function of financing agent, one person contacting the buyer by telephone, for example, and another person making house calls.

## Claims

1. A method for financing an order that was placed via a data network, such as the Internet, comprising the steps of:
A taking a buyer's order via the data network, by or on behalf of a seller, by registering order data of a product or service, identification data of the buyer and a financing request from the buyer,
B obtaining assessment data in respect of the financing request,
C checking the buyer's creditworthiness on the basis of the available data by a lender in connection with the approval or rejection of the financing request,
D visiting the buyer, by or on behalf of the lender, upon approval of the financing request,
E having the buyer sign a financing agreement, preferably during the aforesaid visit,
F verifying at least part of the identification data and assessment data against relevant documents provided by the buyer, and
G delivering the order to the buyer by the seller after the financing agreement has been signed and the verification carried out in step F has produced a positive result.

2. A method according to claim 1, **characterized in that** the buyer is contacted, preferably called, for the purpose of obtaining assessment data in accordance with step B, during which contact the identification information can furthermore be completed, if necessary.

3. A method according to claim 1 or 2, **characterized in that** the copies for step F are made during the visit in accordance with step E.

4. A method according to claim 1, 2 or 3, **characterized in that** at least step D is carried out by a financing agent.

5. A method according to any one of the preceding claims, **characterized in that** step F is carried out at least after the visit in accordance with step D.

6. A system for implementing a method for financing an order that has been placed via a data network, such as the Internet, comprising means arranged for carrying out the steps A - G of the method according to claim 1.
